# EUROPÄISCHE PATENTSCHRIFT

(11) **EP 3 271 229 B1**
(45) Veröffentlichungstag und Bekanntmachung des Hinweises auf die Patenterteilung: **12.12.2018**
(21) Anmeldenummer: 16710918.0
(22) Anmeldetag: 11.03.2016
(51) Int. Cl.: B60W 10/04, B60W 10/18, B60W 10/20, B60W 50/08, B60W 50/14, B60W 40/09

(54) **VERFAHREN ZUM BETREIBEN EINES KRAFTFAHRZEUGS UND ZUGEHÖRIGES KRAFTFAHRZEUG**
METHOD FOR OPERATING A VEHICLE AND CORRESPONDING VEHICLE
PROCÉDÉ POUR FAIRE FONCTIONNER UN VÉHICULE ET VÉHICULE CORRESPONDANT

(30) Priorität: 14.03.2015 DE 102015003348
(43) Veröffentlichungstag der Anmeldung: 24.01.2018
(73) Patentinhaber: Audi AG, 85045 Ingolstadt (DE)
(72) Erfinder: BARKE, Alexander, 85049 Ingolstadt (DE); NIEMEIER, Christian, 85049 Ingolstadt (DE)
(86) Internationale Anmeldenummer: PCT/EP2016/000437
(87) Internationale Veröffentlichungsnummer: WO 2016/146247

(56) Entgegenhaltungen:
- EP-A1- 2 813 408
- DE-A1-102012 213 965
- DE-A1-102013 010 928
- US-A1- 2014 148 988
- US-A1- 2014 244 096

## Beschreibung

Die Erfindung betrifft ein Verfahren zum Betreiben eines Kraftfahrzeugs mit wenigstens einem Sensor zum Erfassen eines Benutzerzustands und/oder wenigstens eines Parameters, aus dem der Benutzerzustand ableitbar ist.

Moderne Kraftfahrzeuge verfügen über Fahrerassistenzsysteme, die über eine Vielzahl von Funktionen verfügen, die es ermöglichen, dem Fahrer eine Fahraufgabe, beziehungsweise das Bedienen einer Funktion oder einer Einrichtung des Kraftfahrzeugs, zumindest teilweise abzunehmen oder den Komfort des Fahrers anderweitig zu erhöhen. Zum Stand der Technik gehören ebenfalls Fahrerassistenzsysteme, die dazu ausgebildet sind, einen Vitalzustand eines Benutzers zu erkennen, das heißt, beispielsweise zu erfassen, ob der Benutzer des Kraftfahrzeugs müde ist. Nach dem Stand der Technik kann bei einer Erfassung eines erschöpften beziehungsweise ermüdeten Fahrers eine Warnung beziehungsweise eine Empfehlung zum Einlegen einer Pause abgegeben werden.

Nachteilig ist, dass dabei lediglich eine Warnung ausgegeben wird und der Fahrer nicht im Zuge der gewonnenen Information, beispielsweise angepasst an den betreffenden Vitalzustand, unterstützt wird.

Ferner kann bei den im Stand der Technik bekannten Fahrerassistenzsystemen nicht berücksichtigt werden, ob ein Fahrerwechsel vorliegt beziehungsweise sind die üblichen Fahrerassistenzsysteme nicht auf einen individuellen Fahrer anpassbar.

Aus der US 2014/0244096 A1 sind eine Vorrichtung und ein Verfahren bekannt, die es möglichen, einen momentanen Fahrmodus eines Kraftfahrzeugs in Abhängigkeit eines Zustandes des Fahrers zu verändern.

In der EP 2 813 408 A1 sind eine Vorrichtung und ein Verfahren zum Betreiben eines Fahrzeugs beschrieben, wobei eine Fahrzeugführung eines Fahrers des Fahrzeugs überwacht wird, so dass basierend auf der überwachten Fahrzeugführung einen Fahrstil des Fahrers beschreibende Fahrparameter gebildet werden, welche einem Fahrerassistenzsystem des Fahrzeugs bereitgestellt werden, so dass bei einer Steuerung des Fahrzeugs mittels des Fahrerassistenzsystems der Fahrstil des Fahrers zumindest teilweise abgebildet wird.

Der Erfindung liegt die Aufgabe zugrunde, ein demgegenüber verbessertes Verfahren zum Betreiben eines Kraftfahrzeugs anzugeben.

Die Aufgabe wird durch ein Verfahren der eingangs genannten Art gelöst, bei dem erfindungsgemäß vorgesehen ist, dass abhängig von einem erfassten Benutzerzustand und/oder einer erfassten Änderung des Benutzerzustands ein Autonomiegrad, der festlegt, zu welchem Anteil eine Funktion und/oder eine Einrichtung des Kraftfahrzeugs automatisch durch eine Steuerungseinrichtung des Kraftfahrzeugs oder manuell durch einen Benutzer gesteuert wird, wenigstens einer Funktion und/oder wenigstens einer Einrichtung des Kraftfahrzeugs verändert und die Funktion und/oder die Einrichtung dem Autonomiegrad entsprechend gesteuert wird, wobei wenigstens ein Benutzerprofil angelegt wird, in dem wenigstens ein Benutzerzustand für wenigstens eine Situation hinterlegt wird, wobei bei Eintreten der Situation der Autonomiegrad der entsprechenden Funktion und/oder Einrichtung gemäß des Benutzerprofils angepasst wird.

Der Erfindung liegt die Idee zugrunde, dass mittels wenigstens eines Sensors ein Benutzerzustand beziehungsweise ein Parameter erfasst wird, aus dem der Benutzerzustand ableitbar ist und anhand dieses Benutzerzustands ein Autonomiegrad für wenigstens eine Funktion und/oder eine Einrichtung des Kraftfahrzeugs festgelegt wird. Anhand dieses Autonomiegrads wird erfindungsgemäß festgelegt, inwieweit die Funktion beziehungsweise die Einrichtung des Kraftfahrzeugs autonom, also durch eine Steuerungseinrichtung des Kraftfahrzeugs oder manuell durch den Benutzer geregelt wird. Vorteilhafterweise wird ermöglicht, dass bei einer Änderung des Benutzerzustands die Steuerungseinrichtung automatisch wenigstens eine Funktion beziehungsweise Einrichtung zumindest teilweise übernehmen oder die Steuerung derselben an den Benutzer zurückgeben kann. Beispielsweise kann die Steuerungseinrichtung bei einer erfassten Ablenkung des Benutzers, z. B. durch Müdigkeit oder ein Telefongespräch oder ein Gespräch mit den Insassen oder Infotainment-Anwendungen, den Fahrbetrieb oder jede andere Funktion des Kraftfahrzeugs zumindest teilautonom übernehmen.

Der Benutzer wird hierdurch unterstützt und die Ablenkung des Benutzers wird mithin ausgeglichen, ohne dass der Benutzer dies aktiv veranlassen muss. Mit anderen Worten wird durch den Sensor erfasst, ob eine Ablenkung des Benutzers, oder ein anderer Benutzerzustand, der eine Übernahme durch die Steuerungseinrichtung zweckmäßig macht, vorliegt, und falls dies der Fall ist, wird eine Funktion oder eine Einrichtung, insbesondere eine, die von der Ablenkung des Benutzers betroffen ist, zumindest teilautonom von der Steuerungseinrichtung übernommen.

Selbstverständlich kann statt dem wenigstens einen Sensor auch eine Sensoranordnung, die mehrere Sensoren umfasst, verwendet werden.

Besonders bevorzugt kann vorgesehen sein, dass die wenigstens eine Funktion und/oder die wenigstens eine Einrichtung eine Längsführung und/oder eine Querführung des Kraftfahrzeugs steuert. Mithin wird bei einem entsprechenden Benutzerzustand der Autonomiegrad einer die Längsführung und/oder die Querführung des Kraftfahrzeugs steuernden Funktion und/oder der die Längsführung und/oder die Querführung des Kraftfahrzeugs steuernden Einrichtung erhöht, das heißt, der Anteil der autonomen Steuerung wird erhöht, so dass die Steuerungseinrichtung das Kraftfahrzeug zumindest teilautonom längs und/oder quer führt.

Vorteilhafterweise kann somit verhindert werden, dass durch den Benutzerzustand, beispielsweise eine Ablenkung des Benutzers die Längs- und/oder die Querführung des Kraftfahrzeugs aufgrund der unzureichenden Aufmerksamkeit des Benutzers beeinträchtigt wird. Die Steuerungseinrichtung nimmt sonach die Längsführung und/oder die Querführung des Kraftfahrzeugs zumindest teilautonom wahr, während der Benutzer abgelenkt oder anderweitig vermindert fähig ist, das Kraftfahrzeug zu steuern. Ist die Ursache der Ablenkung vorüber, beziehungsweise ändert sich der Benutzerzustand wieder, so ist es ebenfalls möglich, dass der Autonomiegrad der betreffenden Funktion und/oder der betreffenden Einrichtung des Kraftfahrzeugs weiter erhöht oder wieder herabgesetzt wird, so dass der Benutzer das Kraftfahrzeug beziehungsweise die entsprechende Funktion und/oder die entsprechende Einrichtung des Kraftfahrzeugs wieder manuell steuert oder die Steuerungseinrichtung die Steuerung der entsprechenden Funktion und/oder Einrichtung vollständig autonom übernimmt.

Wie bereits erwähnt, wird nach dem erfindungsgemäßen Verfahren wenigstens ein Benutzerprofil angelegt, in dem wenigstens ein Benutzerzustand für wenigstens eine Situation hinterlegt wird. Vorteilhafterweise kann hierdurch für wenigstens einen Benutzer individuell gespeichert werden, welcher Benutzerzustand in welcher Situation vorliegt. Somit kann flexibel auf eine auftretende Situation reagiert werden, da anhand des Benutzerprofils bestimmbar ist, welcher Benutzerzustand in der entsprechenden Situation in der Vergangenheit vorlag. Sonach kann bereits bei Eintreten der Situation der Autonomiegrad der entsprechenden Funktion und/oder Einrichtung gemäß des Benutzerprofils angepasst werden. Dies können beispielsweise bestimmte Straßen sein, bei deren Befahren sich der individuelle Benutzer unwohl fühlt oder unsicher reagiert hat. Beispielsweise wären auch Witterungsbedingungen zu nennen oder Fahrsituationen, die dem individuellen Benutzer weniger gelegen sind, beispielsweise Einparkvorgänge. Wird dies anhand des Benutzerzustands durch den Sensor erfasst, so ist es möglich, dass der Autonomiegrad erhöht wird. Beispielsweise kann bei einem Benutzer, der sich in Einparksituationen unwohl fühlt, dies erfasst werden und entsprechend die Längs- und/oder die Querführung des Kraftfahrzeugs vollautonom von der Steuerungseinrichtung übernommen werden, so dass der Einparkvorgang vollautonom erfolgt und der Benutzer somit entlastet wird.

Besonders bevorzugt ist demnach, dass bei Vorliegen der wenigstens einen Situation der Autonomiegrad entsprechend des hinterlegten Benutzerzustands verändert wird.

Eine besonders bevorzugte Weiterbildung des erfindungsgemäßen Verfahrens kann vorsehen, dass die Situation eine Fahrsituation und/oder das Vorliegen einer den Benutzer von der Fahrsituation ablenkenden Ursache beschreibt. Daneben ist es möglich, dass bei Vorliegen einer den Benutzer von der Fahrsituation ablenkenden Ursache der Autonomiegrad erhöht wird. Beispielsweise ist dies der Fall, wenn der Benutzer durch das Erhalten einer Nachricht oder durch ein eingehendes Telefongespräch oder eine Infotainment-Anwendung abgelenkt wird, so dass die Aufmerksamkeit des Benutzers nicht auf der Fahrsituation, sondern auf der ihn von der Fahrsituation ablenkenden Ursache liegt. In einem solchen Fall ist es ebenfalls möglich, den Autonomiegrad automatisch zu erhöhen. Eine Beeinträchtigung der Funktion und/oder der Einrichtung, für die der Autonomiegrad erhöht wurde, ist somit aufgrund der Ursache, die den Benutzer ablenkt, vermindert oder vermieden.

Vorteilhafterweise kann zusätzlich mittels des wenigstens einen und/oder wenigstens eines weiteren Sensors wenigstens eine die Umgebung des Kraftfahrzeugs betreffende Information erfasst werden. Es ist somit möglich, weitere Informationen zu erhalten, die einen Rückschluss auf die Notwendigkeit eines Veränderns des Autonomiegrades liefern. Beispielsweise kann bei Witterungsverhältnissen und/oder Lichtverhältnissen und/oder Objekten in der Umgebung des Kraftfahrzeugs eine Änderung des Benutzerzustands eintreten, die erfasst werden kann. Der Autonomiegrad kann in diesen Fällen entsprechend der Änderung des Benutzerzustands für jede Funktion und/oder Einrichtung des Kraftfahrzeugs verändert werden.

Eine bevorzugte Ausgestaltung der Erfindung sieht vor, dass der Benutzerzustand anhand einer Pulsfrequenz und/oder einer Gesichtsfarbe eines Benutzers und/oder einer Blinzelfrequenz des Benutzers und/oder eines Lenkverhaltens des Benutzers und/oder eines Fahrverhaltens des Benutzers ermittelt wird. Hier ist anzumerken, dass zum einen Parameter erfasst werden können, die auf wenigstens eine Vitalfunktion des Benutzers Rückschlüsse liefern, wie beispielsweise das Ermitteln der Pulsfrequenz und/oder der Gesichtsfarbe und/oder der Blinzelfrequenz des Benutzers. Selbstverständlich können daneben auch sämtliche weiteren Parameter erfasst werden, die einen Rückschluss auf die Vitalfunktionen des Benutzers liefern. Möglich wäre hier beispielsweise der Blutdruck. Daneben ist es ebenfalls möglich Parameter zu erfassen, die einen Rückschluss auf das Befinden beziehungsweise den Gemütszustand des Benutzers liefern. Beispielhaft seien hierbei das Lenkverhalten des Benutzers und/oder das Fahrverhalten des Benutzers genannt. Hierüber kann bestimmt werden, ob der Benutzer eine aggressive Fahrweise beziehungsweise eine entspannte Fahrweise hat und der Autonomiegrad entsprechend geregelt werden. So ist es vorteilhaft zum Schutze des Benutzers und der Umgebung, dass bei einer aggressiven Fahrweise aufgrund eines entsprechenden Gemütszustands zumindest die Funktionen beziehungsweise die Einrichtungen des Kraftfahrzeugs die auf den Fahrbetrieb einwirken zumindest teilautonom von der Steuerungseinrichtung übernommen oder eine manuelle Steuerung durch den Benutzer beschränkt wird.

Die eine Vitalfunktion des Benutzers beschreibenden Parameter können zusätzlich Informationen über die Konstitution des Fahrers liefern. Somit können anhand der Pulsfrequenz und/oder der Gesichtsfarbe und/oder der Blinzelfrequenz Rückschlüsse auf die Müdigkeit oder den Gesundheitszustand des Benutzers getroffen werden. Entsprechend kann der Autonomiegrad einer Funktion und/oder einer Einrichtung des Kraftfahrzeugs verändert werden, beispielsweise kann der Fahrbetrieb des Kraftfahrzeugs autonom durch die Steuerungseinrichtung erfolgen, wenn der Benutzer übermüdet ist, und die Lautstärke eines Radios erhöht werden, um den Benutzer wach zu halten. Gleichwohl ist es möglich, die Temperatur im Innenraum des Kraftfahrzeugs entsprechend zu regeln, so dass der Benutzer nicht einschläft. Falls erfasst wird, dass der Benutzer eingeschlafen ist, kann selbstverständlich die Steuerung des Kraftfahrzeugs, insbesondere die die Längs- und/oder die Querführung des Kraftfahrzeugs betreffende Funktion und/oder Einrichtung von der Steuerungseinrichtung autonom übernommen werden.

Besonders bevorzugt ist es möglich, dass der Autonomiegrad zwischen einem autonomen, teilautonomen und manuellen Betrieb, insbesondere stufenlos, verändert werden kann. Der Autonomiegrad kann somit entweder in Stufen, zumindest manuell, teilautonom und autonom verändert werden. Es ist jedoch auch möglich, weitere Stufen vorzusehen oder den Autonomiegrad stufenlos zu verändern. Dabei ist es möglich, die einzelnen Funktionen entweder zu beschränken beziehungsweise beschränkt freizugeben oder die Unterstützung des Benutzers beispielsweise bei der Querführung und/oder der Längsführung des Kraftfahrzeugs zu einem gewissen Grad zu unterstützen oder diesen vollständig dem Benutzer zu überlassen oder diese vollständig autonom zu regeln. Selbstverständlich ist dies auf alle Einrichtungen beziehungsweise Funktionen des Kraftfahrzeugs übertragbar.

Eine bevorzugte Weiterbildung des erfindungsgemäßen Verfahrens besteht darin, dass bei einer Erhöhung des Autonomiegrads einer Funktion und/oder einer Einrichtung des Kraftfahrzeugs die Funktion und/oder die Einrichtung beschränkt wird. Es ist mithin nicht nur möglich, dass die Steuerungseinrichtung die Kontrolle beziehungsweise die Steuerung einer Funktion und/oder einer Einrichtung des Kraftfahrzeugs übernimmt, sondern es ist ebenfalls möglich, dem Benutzer die Kontrolle über die entsprechende Funktion und/oder Einrichtung des Kraftfahrzeugs zu belassen, diese jedoch zu beschränken. So ist es beispielsweise möglich, die Längsführung zu beschränken, falls ein aggressiver Gemütszustand des Benutzers erfasst wurde, so dass beispielsweise ein maximaler Beschleunigungswert definiert wird, der nicht überschritten werden kann. Somit wird verhindert, dass der Benutzer zu aggressiv beschleunigt und sich oder sein Umfeld dadurch gefährdet.

Daneben kann besonders bevorzugt vorgesehen sein, dass die Veränderung des Autonomiegrades durch eine Benutzereingabe rückgängig gemacht oder reduziert oder verhindert werden kann. Es ist sonach möglich, dass die automatische Veränderung des Autonomiegrades durch einen Benutzer nicht gewollt oder akzeptiert ist, und dieser dieselbe durch eine Benutzereingabe rückgängig macht. Ebenso ist es möglich, beispielsweise eine vollautonome Übernahme einer entsprechenden Funktion und/oder einer Einrichtung des Kraftfahrzeugs auf eine teilautonome Steuerung zu reduzieren. Zudem ist es möglich, dass eine bevorstehende Erhöhung des Autonomiegrades, also eine Übernahme der Steuerung einer Funktion und/oder einer Einrichtung des Kraftfahrzeugs durch die Steuereinrichtung verhindert oder reduziert werden kann.

Besonders bevorzugt ist es, dass bei einer Veränderung des Autonomiegrades wenigstens einer Funktion und/oder einer Einrichtung des Kraftfahrzeugs eine entsprechende Warnmeldung, vorzugsweise optisch auf einer Anzeigeeinrichtung des Kraftfahrzeugs oder akustisch oder haptisch, ausgegeben wird. Dies bietet den Vorteil, dass der Benutzer darüber informiert wird, dass der Autonomiegrad wenigstens einer Funktion und/oder einer Einrichtung verändert wird. Bevorzugt erhält der Fahrer hierbei eine Information darüber, inwieweit der Autonomiegrad verändert wird. So kann dem Benutzer beispielsweise mitgeteilt werden, dass die Längs- und/oder Querführung des Kraftfahrzeugs teilautonom oder autonom übernommen wird. Der Benutzer erhält diese Information und kann sich dann beispielsweise komplett auf die Ursache konzentrieren, die ihn vom Fahrbetrieb abgelenkt hat.

Daneben betrifft die Erfindung ein Kraftfahrzeug mit wenigstens einem Sensor zum Erfassen eines Benutzerzustands und/oder wenigstens eines Parameters, aus dem der Benutzerzustand ableitbar ist. Die Steuerungseinrichtung ist dazu ausgebildet, einen Autonomiegrad, der festlegt, zu welchem Anteil eine Funktion und/oder eine Einrichtung des Kraftfahrzeugs automatisch durch die Steuerungseinrichtung des Kraftfahrzeugs oder manuell durch einen Benutzer gesteuert wird, zu verändern und die Funktion und/oder die Einrichtung dem Autonomiegrad entsprechend zu steuern. Das erfindungsgemäße Kraftfahrzeug ist somit zur Durchführung des erfindungsgemäßen Verfahrens ausgebildet ist. Selbstverständlich sind alle Einzelheiten und Merkmale, die zum erfindungsgemäßen Verfahren genannt wurden, auch auf das erfindungsgemäße Kraftfahrzeug übertragbar.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: eine Seitenansicht eines erfindungsgemäßen Kraftfahrzeugs; und
- Fig. 2: ein Flussdiagramm mit den wesentlichen Schritten des erfindungsgemäßen Verfahrens.

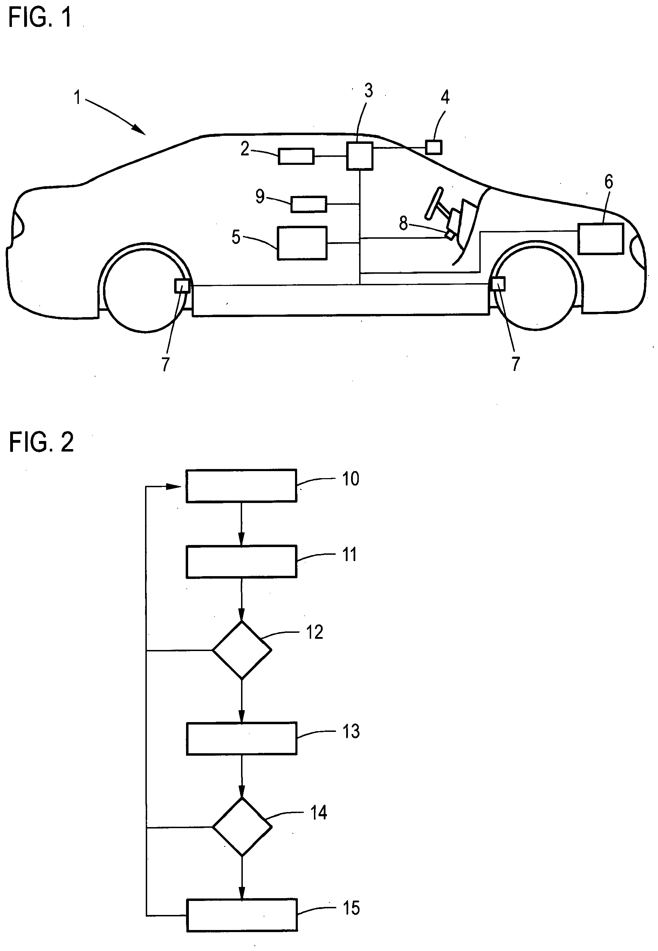

Fig. 1 zeigt ein Kraftfahrzeug 1 umfassend eine Vitalsensoranordnung 2, eine Verhaltenssensoranordnung 3 und eine Umweltsensoranordnung 4, die kraftfahrzeugseitig am Kraftfahrzeug 1 angeordnet sind. Hierbei handelt es sich bei der Vitalsensoranordnung 2 symbolisch um eine Vielzahl von Sensoren, die einen Puls, einen Blutdruck, eine Gesichtsfarbe und die Blinzelfrequenz eines Benutzers des Kraftfahrzeugs 1 erfassen. Die Verhaltenssensoranordnung 3 erfasst das Fahrverhalten beziehungsweise das Lenkverhalten des Benutzers. Die Verhaltenssensoranordnung 3 erfasst hierzu z. B. Längs- und Querbeschleunigungen des Kraftfahrzeugs 1 sowie das Lenk- und Beschleunigungsverhalten des Benutzers. Ferner werden über eine Innenraumüberwachung ebenfalls Parameter erfasst, die auf das Verhalten des Benutzers schließen lassen.

Die Umweltsensoranordnung 4 erfasst Umwelteinflüsse, wie die Lichtverhältnisse, Objekte im Umfeld des Kraftfahrzeugs 1, die Witterungsverhältnisse und dergleichen. Die Sensoranordnungen 2 bis 4 sind sonach zum Erfassen eines Benutzerzustands und/oder wenigstens eines Parameters, aus dem der Benutzerzustand ableitbar ist, ausgebildet. Das Kraftfahrzeug 1 verfügt ferner über eine Steuerungseinrichtung 5, die dazu ausgebildet ist, durch einen Eingriff in einen Antrieb 6 und eine Bremseinrichtung 7 und eine Lenkung 8 den Fahrbetrieb beziehungsweise die Längs- und die Querführung des Kraftfahrzeugs 1 zu steuern.

Daneben verfügt das Kraftfahrzeug 1 über eine Einrichtung 9, die symbolisch für weitere Funktionen und Einrichtungen des Kraftfahrzeugs 1 steht. Hierbei können gemäß diesem Ausführungsbeispiel eine Multimediaeinrichtung, die zum Empfangen und Versenden von Nachrichten und dem Darstellen von Multimediainhalten ausgebildet ist, verstanden werden.

Das Verfahren zum Betreiben des Kraftfahrzeugs 1 wird nachfolgend anhand des Flussdiagramms, das in Fig. 2 dargestellt ist, erläutert.

Das Verfahren beginnt in Block 10 mit dem Starten des Verfahrens. In Block 11 werden sonach mittels der Sensoranordnungen 2, 3, 4 die Vitalwerte, das Verhalten sowie die Umweltparameter des Benutzers des Kraftfahrzeugs 1 erfasst. Anschließend wird in Block 12 erfasst, ob ein Benutzerzustand beziehungsweise eine Änderung des Benutzerzustandes vorliegt, der oder die eine Änderung des Autonomiegrades erforderlich machen. Ist dies nicht der Fall, wird von Block 12 auf Block 11 zurückverzweigt, indem die Erfassung der Parameter über die Sensoranordnungen 2 bis 4 fortgesetzt wird.

Ist in Block 12 jedoch ein Benutzerzustand beziehungsweise eine Änderung des Benutzerzustandes erfasst, die eine Änderung des Autonomiegrades erforderlich macht, so wird von Block 12 auf Block 13 verzweigt, in dem überprüft wird, welche Funktion beziehungsweise welche Einrichtung des Kraftfahrzeugs 1 von dem Benutzerzustand beziehungsweise dem geänderten Benutzerzustand betroffen ist. Zusätzlich wird in Block 13 überprüft, inwieweit der Autonomiegrad jeder entsprechenden betroffenen Funktion beziehungsweise Einrichtung des Kraftfahrzeugs 1 zu verändern ist. Selbstverständlich ist es möglich, dass verschiedene Funktionen oder Einrichtungen des Kraftfahrzeugs 1 verschieden stark in ihrem Autonomiegrad verändert werden müssen. So kann beispielsweise die Steuerungseinrichtung 5 einen Fahrbetrieb übernehmen falls eine Unaufmerksamkeit des Benutzers erfasst wurde, indem die Autonomiegrade für die Antriebseinrichtung 6, die Bremseinrichtung 7 und die Lenkeinrichtung 8 erhöht werden, so dass ihre Steuerung vollständig autonom erfolgt. Die Einrichtung 9, die keinen Einfluss auf den Fahrbetrieb hat, wird folglich nicht betroffen und demzufolge auch nicht erhöht. Hierbei kann es notwendig sein, die Autonomiegrade der Lenkeinrichtung 8, der Bremseinrichtung 7 oder der Antriebseinrichtung 6 unterschiedlich zu verändern. Dies wird ebenfalls in Block 13 festgelegt. Anschließend wird in Block 14 überprüft, ob der Benutzer eine Bedieneingabe macht, die eine Veränderung eines Autonomiegrades verhindern, reduzieren oder rückgängig machen soll. Hierzu kann dem Benutzer auf der Einrichtung 9 angezeigt werden, dass eine Erhöhung des Autonomiegrades für eine Funktion oder Einrichtung des Kraftfahrzeugs 1 bevorsteht oder stattgefunden hat. Nimmt der Benutzer eine solche Eingabe vor, so wird von Block 14 auf Block 11 zurückverzweigt, indem über die Sensoranordnungen 2 bis 4 der Benutzerzustand beziehungsweise eine Änderung des Benutzerzustands erfasst wird. Ist dies nicht der Fall, so wird das Verfahren in Block 15 fortgesetzt, indem der Autonomiegrad geändert wird und die Steuerung der entsprechenden Funktion und/oder Einrichtung des Kraftfahrzeugs 1 entsprechend der Änderung des Autonomiegrades erfolgt. Dies kann insbesondere eine manuelle oder teilautonome oder vollautonome Steuerung der entsprechenden Funktion und/oder Einrichtung des Kraftfahrzeugs 1 sein.

Nach der Änderung des Autonomiegrades in Block 15 wird ebenfalls zu Block 11 zurückverzweigt, indem mittels der Sensoranordnungen 2 bis 4 festgestellt wird, ob eine erneute Änderung des Benutzerzustands beziehungsweise ein Benutzerzustand vorliegt, der eine erneute Änderung des Autonomiegrades oder einer Änderung des Autonomiegrades für eine weitere Funktion und/oder eine Einrichtung des Kraftfahrzeugs 1 erforderlich macht. Falls der Fahrer mit dem Lesen der Nachricht fertig ist, so dass seine Aufmerksamkeit wieder der Fahrsituation zugewendet ist, wird in Block 12 erfasst, dass die Änderung des Benutzerzustandes eine Änderung des Autonomiegrades erforderlich macht. In Block 13 wird sonach festgestellt, dass die erneute Erhöhung der Aufmerksamkeit des Benutzers auf die Fahrsituation die Bremseinrichtung 7, die Lenkeinrichtung 8 und die Antriebseinrichtung 6 betrifft. Sofern ein Benutzer dies in Block 14 nicht verhindert, wird in Block 15 der Autonomiegrad der entsprechenden Einrichtungen wieder reduziert, so dass der Benutzer diese wieder manuell oder teilautonom steuern kann.

Zudem ist es möglich, in der Steuerungseinrichtung 5 des Kraftfahrzeugs 1 wenigstens ein Benutzerprofil anzulegen, in dem für wenigstens eine Situation wenigstens ein Benutzerzustand gespeichert ist. Wird das Vorliegen beziehungsweise das Eintreten einer solchen Situation durch einen der Sensoranordnungen 2, 3, 4 oder eine beliebige Kombination von wenigstens zwei der Sensoranordnungen 2, 3, 4 erfasst, so kann der Autonomiegrad für die betroffene Funktion oder die betroffene Einrichtung des Kraftfahrzeugs 1 entsprechend dem Benutzerprofil verändert werden. Insbesondere kann das Benutzerprofil dynamisch durch das Verfahren erweitert werden, indem eine bereits durchfahrene Situation im Benutzerprofil zusammen mit dem wenigstens einen durch die Sensoranordnungen 2, 3, 4 erfassten Parameter abgespeichert werden. Das Verfahren kann somit individuell an jeden Benutzer angepasst werden. Das Verfahren ist somit in der Lage, Schwächen des Benutzers beziehungsweise Situationen, in denen sich ein Benutzer nicht wohlfühlt oder nicht manuell durchfahren möchte, bei deren Eintreten zu erfassen und die Steuerung wenigstens einer betroffenen Funktion oder Einrichtung des Kraftfahrzeugs 1 autonom zu übernehmen oder den Benutzer des Kraftfahrzeugs 1 teilautonom zu unterstützen. Für den Benutzer bietet dies den Vorteil, dass dieser in einer für ihn unkomfortablen Situation zumindest teilautonom oder insbesondere autonom unterstützt wird. Der Komfort des Benutzers wird somit erhöht.

## Patentansprüche

1. Verfahren zum Betreiben eines Kraftfahrzeugs (1) mit wenigstens einem Sensor (2, 3, 4) zum Erfassen eines Benutzerzustands und/oder wenigstens eines Parameters, aus dem der Benutzerzustand ableitbar ist, wobei abhängig von einem erfassten Benutzerzustand und/oder einer erfassten Änderung des Benutzerzustands ein Autonomiegrad, der festlegt, zu welchem Anteil eine Funktion und/oder eine Einrichtung (6, 7, 8, 9) des Kraftfahrzeugs (1) automatisch durch eine Steuerungseinrichtung (5) des Kraftfahrzeugs (1) oder manuell durch einen Benutzer gesteuert wird, wenigstens einer Funktion und/oder wenigstens einer Einrichtung (6, 7, 8, 9) des Kraftfahrzeugs (1) verändert und die Funktion und/oder die Einrichtung (6, 7, 8, 9) dem Autonomiegrad entsprechend gesteuert wird,
**dadurch gekennzeichnet,**
**dass** wenigstens ein Benutzerprofil angelegt wird, in dem wenigstens ein Benutzerzustand für wenigstens eine Situation hinterlegt wird, wobei bei Eintreten der Situation der Autonomiegrad der entsprechenden Funktion und/oder Einrichtung gemäß des Benutzerprofils angepasst wird.

2. Verfahren nach Anspruch 1,
**dadurch gekennzeichnet,**
**dass** die wenigstens eine Funktion und/oder die wenigstens eine Einrichtung (6, 7, 8) eine Längsführung und/oder eine Querführung des Kraftfahrzeugs (1) steuert.

3. Verfahren nach Anspruch 1 oder 2,
**dadurch gekennzeichnet,**
**dass** bei Vorliegen der wenigstens einen Situation der Autonomiegrad entsprechend des hinterlegten Benutzerzustands verändert wird.

4. Verfahren nach einem der vorangehenden Ansprüche,
**dadurch gekennzeichnet,**
**dass** die Situation eine Fahrsituation und/oder das Vorliegen einer den Benutzer von der Fahrsituation ablenkenden Ursache beschreibt.

5. Verfahren nach einem der vorangehenden Ansprüche,
**dadurch gekennzeichnet,**
**dass** mittels des wenigstens einen und/oder wenigstens eines weiteren Sensors (4) wenigstens eine die Umgebung des Kraftfahrzeugs (1) betreffende Information erfasst wird.

6. Verfahren nach Anspruch 5,
**dadurch gekennzeichnet,**
**dass** der Autonomiegrad, der für den Betrieb der wenigstens einen Funktion und/oder der wenigstens einen Einrichtung (6, 7, 8, 9) des Kraftfahrzeugs festgelegt wird, abhängig von der wenigstens einen die Umgebung des Kraftfahrzeugs 1 betreffenden Information verändert wird.

7. Verfahren nach einem der vorangehenden Ansprüche,
**dadurch gekennzeichnet,**
**dass** der Benutzerzustand anhand einer Pulsfrequenz und/oder einer Gesichtsfarbe eines Benutzers und/oder einer Blinzelfrequenz des Benutzers und/oder eines Lenkverhaltens des Benutzers und/oder eines Fahrverhaltens des Benutzers ermittelt wird.

8. Verfahren nach einem der vorangehenden Ansprüche,
**dadurch gekennzeichnet,**
**dass** der Autonomiegrad zwischen einem autonomen, teilautonomen und manuellen Betrieb, insbesondere stufenlos, verändert werden kann.

9. Verfahren nach einem der vorangehenden Ansprüche,
**dadurch gekennzeichnet,**
**dass** bei einer Erhöhung des Autonomiegrades einer Funktion und/oder einer Einrichtung (6, 7, 8, 9) des Kraftfahrzeugs (1) die Funktion und/oder die Einrichtung beschränkt wird.

10. Verfahren nach einem der vorangehenden Ansprüche,
**dadurch gekennzeichnet,**
**dass** die Veränderung des Autonomiegrades durch eine Benutzereingabe rückgängig gemacht oder reduziert oder verhindert werden kann.

11. Verfahren nach einem der vorangehenden Ansprüche,
**dadurch gekennzeichnet,**
**dass** bei einer Veränderung des Autonomiegrades wenigstens einer Funktion und/oder einer Einrichtung (6, 7, 8, 9) des Kraftfahrzeugs (1) eine entsprechende Warnmeldung, vorzugsweise optisch auf einer Anzeigeeinrichtung des Kraftfahrzeugs oder akustisch oder haptisch, ausgegeben wird.

12. Kraftfahrzeug mit wenigstens einem Sensor,
**dadurch gekennzeichnet,**
**dass** es zur Durchführung des Verfahrens nach einem der vorangehenden Ansprüche ausgebildet ist.

## Claims

1. Method for operating a motor vehicle (1) with at least one sensor (2, 3, 4) for detecting a user status and/or at least one parameter from which the user status can be derived, wherein, depending on a detected user status and/or a detected change of the user status, a degree of autonomy which determines what proportion a function and/or a device (6, 7, 8, 9) of the motor vehicle (1) is controlled automatically by a control device (5) of the motor vehicle (1) or manually by a user, changes at least one function and/or at least one device (6, 7, 8, 9) of the motor vehicle (1) and the function and/or the device (6, 7, 8, 9) is controlled corresponding to the degree of autonomy,
**characterised in that**
at least one user profile is created in which is stored at least one user status for at least one situation, wherein the degree of autonomy of the corresponding function and/or device is adapted according to the user profile when the situation occurs.

2. Method according to claim 1,
**characterised in that**
the at least one function and/or the at least one device (6, 7, 8) controls a longitudinal guidance and/or a transverse guidance of the motor vehicle (1).

3. Method according to claim 1 or 2,
**characterised in that**
the degree of autonomy is changed corresponding to the stored user status when the at least one situation is present.

4. Method according to any one of the preceding claims,
**characterised in that**
the situation describes a driving situation and/or the presence of a cause diverting the user from the driving situation.

5. Method according to any one of the preceding claims,
**characterised in that**
at least one item of information relating to the environment of the motor vehicle (1) is recorded by means of the at least one and/or at least one further sensor (4).

6. Method according to claim 5,
**characterised in that**
the degree of autonomy, which is determined for the operation of at least one function and/or the at least one device (6, 7, 8, 9) of the motor vehicle, is changed depending on the at least one item of information relating to the environment of the motor vehicle 1.

7. Method according to any one of the preceding claims,
**characterised in that**
the user status is determined based on a pulse frequency and/or a complexion of a user and/or a blinking frequency of the user and/or a steering behaviour of the user and/or a driving behaviour of the user.

8. Method according to any one of the preceding claims,
**characterised in that**
the degree of autonomy can be changed between an autonomous, semi-autonomous and manual operation, in particular stepless.

9. Method according to any one of the preceding claims,
**characterised in that**
the function and/or the device is limited in the case of an increase to the degree of autonomy of a function and/or a device (6, 7, 8, 9) of the motor vehicle (1).

10. Method according to any one of the preceding claims,
**characterised in that**
the change to the degree of autonomy can be retrogressively made or reduced or prevented by a user input.

11. Method according to any one of the preceding claims,
**characterised in that**
in the case of a change to the degree of autonomy of at least one function and/or one device (6, 7, 8, 9) of the motor vehicle (1), a corresponding warning notification is emitted, preferably optically on a display device of the motor vehicle or acoustically or haptically.

12. Motor vehicle having at least one sensor,
**characterised in that**
it is designed to carry out the method according to any one of the preceding claims.

## Revendications

1. Procédé pour faire fonctionner un véhicule automobile (1) avec au moins un capteur (2, 3, 4) pour la détection d'un état d'utilisateur et/ou d'au moins un paramètre, à partir duquel l'état d'utilisateur peut être déduit, dans lequel en fonction d'un état d'utilisateur détecté et/ou d'une modification détectée de l'état d'utilisateur, un degré d'autonomie, qui fixe dans quelle proportion une fonction et/ou un dispositif (6, 7, 8, 9) du véhicule automobile (1) sont commandés automatiquement par un dispositif de commande (5) du véhicule automobile (1) ou manuellement par un utilisateur, d'au moins une fonction et/ou d'au moins un dispositif (6, 7, 8, 9) du véhicule automobile (1) est modifié et la fonction et/ou le dispositif (6, 7, 8, 9) sont commandés en fonction du degré d'autonomie,
**caractérisé en ce**
**qu'**au moins un profil d'utilisateur est créé, dans lequel au moins un état d'utilisateur est enregistré pour au moins une situation, dans lequel lors de la survenue de la situation, le degré d'autonomie de la fonction et/ou du dispositif correspondants est adapté conformément au profil d'utilisateur.

2. Procédé selon la revendication 1,
**caractérisé en ce**
**que** l'au moins une fonction et/ou l'au moins un dispositif (6, 7, 8) commandent un guidage longitudinal et/ou un guidage transversal du véhicule automobile (1).

3. Procédé selon la revendication 1 ou 2,
**caractérisé en ce**
**que** lors de la présence de l'au moins une situation, le degré d'autonomie est modifié en fonction de l'état d'utilisateur enregistré.

4. Procédé selon l'une quelconque des revendications précédentes,
**caractérisé en ce**
**que** la situation décrit une situation de conduite et/ou la présence d'une cause détournant l'attention de l'utilisateur de la situation de conduite.

5. Procédé selon l'une quelconque des revendications précédentes,
**caractérisé en ce**
**qu'**au moins une information concernant l'environnement du véhicule automobile (1) est détectée au moyen de l'au moins un et/ou de l'au moins un autre capteur (4).

6. Procédé selon la revendication 5,
**caractérisé en ce**
**que** le degré d'autonomie, qui est fixé pour le fonctionnement de l'au moins une fonction et/ou de l'au moins un dispositif (6, 7, 8, 9) du véhicule, est modifié en fonction de l'au moins une information concernant l'environnement du véhicule automobile 1.

7. Procédé selon l'une quelconque des revendications précédentes,
**caractérisé en ce**
**que** l'état d'utilisateur est déterminé à l'aide d'une fréquence du pouls et/ou d'une couleur du visage d'un utilisateur et/ou d'une fréquence de clignement de l'utilisateur et/ou d'un comportement de direction de l'utilisateur et/ou d'un comportement de conduite de l'utilisateur.

8. Procédé selon l'une quelconque des revendications précédentes,
**caractérisé en ce**
**que** le degré d'autonomie peut être modifié entre un fonctionnement autonome, semi-autonome et manuel, en particulier en continu.

9. Procédé selon l'une quelconque des revendications précédentes,
**caractérisé en ce**
**qu'**en cas d'augmentation du degré d'autonomie d'une fonction et/ou d'un dispositif (6, 7, 8, 9) du véhicule automobile (1), la fonction et/ou le dispositif sont limités.

10. Procédé selon l'une quelconque des revendications précédentes,
**caractérisé en ce**
**que** la modification du degré d'autonomie peut être annulée ou réduite ou empêchée par une entrée utilisateur.

11. Procédé selon l'une quelconque des revendications précédentes,
**caractérisé en ce**
**qu'**en cas de modification du degré d'autonomie d'au moins une fonction et/ou un dispositif (6, 7, 8, 9) du véhicule automobile (1), un avertissement correspondant, de préférence optique sur un dispositif d'affichage du véhicule automobile ou acoustique ou haptique, est émis.

12. Véhicule automobile avec au moins un capteur,
**caractérisé en ce**
**qu'**il est réalisé pour l'exécution du procédé selon l'une quelconque des revendications précédentes.
